(19) **Europäisches Patentamt**

**European Patent Office**

**Office européen des brevets**

(11) Numéro de publication: **0 218 664**
**B1**

(12) **FASCICULE DE BREVET EUROPEEN**

(45) Date de publication du fascicule du brevet:
**18.10.89**

(21) Numéro de dépôt: **86902426.5**

(22) Date de dépôt: **21.04.86**

(86) Numéro de dépôt international:
**PCT/FR 86/00131**

(87) Numéro de publication internationale:
**WO 86/06453 (06.11.86 Gazette 86/24)**

(51) Int. Cl.⁴: **F 16 J 15/26, F 04 B 21/08**

(54) **DISPOSITIF D'ETANCHEITE HAUTE PRESSION ENTRE DEUX ELEMENTS EN MOUVEMENT RELATIF.**

(30) Priorité: **22.04.85 FR 8506035**

(43) Date de publication de la demande:
**22.04.87 Bulletin 87/17**

(45) Mention de la délivrance du brevet:
**18.10.89 Bulletin 89/42**

(84) Etats contractants désignés:
**AT BE CH DE FR GB IT LI LU NL SE**

(56) Documents cités:
**FR-A- 2 110 263**
**GB-A- 341 771**
**US-A- 3 877 707**

(73) Titulaire: **BERTIN & CIE, Zone Industrielle Boîte postale 3, F-78373 Plaisir Cédex (FR)**

(72) Inventeur: **BALZANO, Lucien, Dominique, 27, square Charles Baudelaire, F-78760 Jouars-Pontchartrain (FR)**
Inventeur: **LEPRETRE, Marc, Vital, Alexandre, 81, rue Paul Deroulède, F-92270 Bois-Colombes (FR)**
Inventeur: **PORTIER, Claude, 8, rue Racine, F-78150 Le Chesnay (FR)**

(74) Mandataire: **de Boisse, Louis Arnaud et al, CABINET de BOISSE 37, Avenue Franklin D. Roosevelt, F-75008 Paris (FR)**

ACTORUM AG

## Description

L'invention concerne un dispositif d'étanchéité haute pression entre deux éléments en mouvement relatif, plus particulièrement destiné à une pompe ou à un amplificateur de pression comportant un plongeur se déplaçant d'un mouvement alternatif longitudinal dans une chambre pour comprimer sous haute pression un fluide qui y est introduit.

On connaît, par exemple, du brevet français No. 2 182 519 un dispositif d'étanchéité, pour une pompe ou un amplificateur de pression, disposé entre la surface du plongeur et la chemise d'une chambre formée dans le corps cylindrique d'une pompe. Le dispositif, logé dans la chemise, comporte un segment communiquant avec le circuit d'alimentation en fluide d'étanchéité extérieur. Sur les parois radiales du segment s'appuie une bague dont la deuxième face latérale présente une forme convexe. Cette face coopère avec des bagues d'étanchéité en chevron. La dernière bague vient en contact avec une bague externe dont la face adjacente est complémentaire de la bague en chevron et dont l'autre face vient contre une bague d'appui en contact avec la paroi radiale du manchon de guidage du plongeur. Le serrage de l'esemble bagues et segment est obtenu par un écrou vissé dans le corps cylindrique. Le fluide d'étanchéité est introduit par le segment sous une pression correspondante à celle qui règne dans la chambre de la pompe lors des cycles de compression et passe entre les bagues d'étanchéité et les surfaces du piston et de la chemise vers l'extrémité à plus faible pression. Le fluide de fuite est récupéré dans un espace annulaire à la pression atmosphérique.

La fuite du fluide d'étanchéité est déterminée par le serrage des bagues qui doit être fréquemmnet réajusté par suite de l'usure.

On connaît en outre du brevet français No 2 155 531 un dispositif d'étanchéité pour ressort pneumatique comprenant entre la surface interne du cylindre et le piston, deux bagues d'étanchéité, séparées par un espace rempli d'un fluide d'étanchéité. Les deux bagues présentent, sur leurs faces latérales en regard, des lèvres extérieure et intérieure. Du côté de l'atmosphère, la première bague s'appuie contre une pièce d'extrémité fixe. Du côté haute pression, la deuxième bague s'appuie contre une face radiale d'une bague mobile d'extrémité dont l'autre face est soumise à la haute pression du gaz enfermé dans le cylindre. Par suite des différences de section de la bague d'extrémité et des bagues d'étanchéité, une pression supérieure à celle du gaz s'exerce sur le fluide d'étanchéité qui plaque les lèvres des bagues contre les parois du cylindre et du piston.

Ce joint a pour principale fonction d'empêcher les fuites du gaz comprimé qui gonfle en permanence le ressort pneumatique.

Le brevet US-A-3 877 707 décrit une pompe haute pression dans laquelle le cylindre est muni d'un logement pour un dispositif d'étanchéité. Le dispositif, placé entre la paroi du cylindre haute pression et le piston, est formé de bagues d'étanchéité métalliques intérieure et extérieure qui reposent dans le logement et forment avec celui-ci une rainure annulaire dans laquelle est logé un joint d'étanchéité élastique. Les bagues intérieure et extérieure ont des surfaces en regard au moins partiellement coniques maintenues écartées par le joint élastique.

Lors du fonctionnement, le fluide comprimé dans le cylindre s'infiltre entre les deux bagues et vient repousser la bague extérieure contre le piston pour assurer l'étanchéité. Le dispositif est sous précontrainte.

Par suite de la précontrainte et du mode de fonctionnement du dispositif d'étanchéité, il faut s'attendre à une usure importante et à des risques de fluage sous pression des joints élastiques.

L'invention a trait à un dispositif semblable à ceux ci-dessus mentionnés, mais se propose de fournir un dispositif d'étanchéité présentant une fuite minime du fluide d'étanchéité et comportant des bagues d'étanchéité à rattrapage de jeux d'une efficacité accrue et d'une plus grande longévité.

Le dispositif selon l'invention est caractérisé en ce qu'au moins un ensemble d'étanchéité forme un ensemble cylindrique constitué d'au moins deux bagues coniques, la section de l'ensemble se présentant approximativement sous la forme d'un rectangle coupé selon une diagonale et dont au moins l'une des faces radiales présente une gorge annulaire débouchant axialement dans laquelle est retenue un joint torique élastique, ladite gorge formée dans une des bagues étant tangente à la surface conique de l'autre bague.

Les explications et figures données ci-après à titre d'exemples permettront de comprendre comment l'invention peut être réalisée.

La figure 1 est une coupe schématique d'une pompe haute pression comportant un premier exemple de réalisation d'un dispositif d'étanchéité selon l'invention.

La figure 2 est une vue en coupe à plus grande échelle du dispositif d'étanchéité de la figure 1.

Les figures 3 à 6 présentent d'autres exemples de réalisation de dispositifs d'étanchéité selon l'invention.

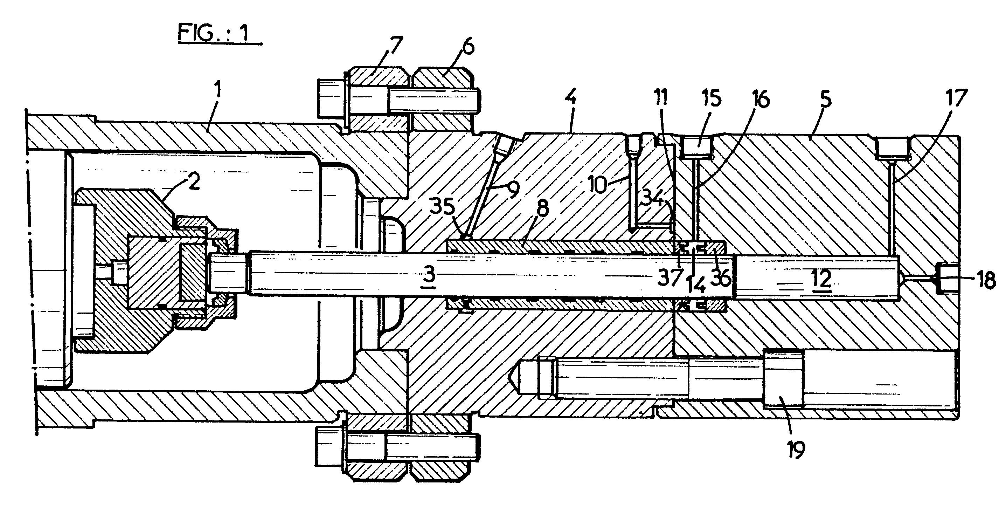

La figure 1 représente, en coupe schématique, une pompe haute pression ou un amplificateur de pression comportant un dispositif d'étanchéité conforme à un exemple de réalisation de l'invention.

Dans la suite de la description, on désignera du terme général de pompe, les pompes haute pression, les amplificateurs de pression et autres dispositifs susceptibles de produire de hautes pressions par l'intermédiaire de la course d'un piston ou plongeur.

La pompe est constituée d'un ensemble cylindrique comportant: un carter cylindrique 1 monté, par une de ses extrémités, sur le dispositif moteur dont l'organe de sortie 2 transmet au plongeur 3 un mouvement de va-et-vient;

— un corps 4 fixé par une bride de liaison 6 à une bride de liaison correspondante 7 prévue à l'autre extrémité du carter. Le corps est traversé axialement par un alésage dans lequel est logé une chemise 8 de faible épaisseur relative dans laquelle se meut le plongeur 3. Des canaux 9 et 10, font communiquer respectivement l'alésage et la face radiale 11 du corps avec des orifices prévus sur la surface extérieure;

— un couvercle 5, fixé à l'extrémité du corps, portant selon son axe un alésage 12 formant chambre de pression;

une chambre d'étanchéité 14, concentrique à la chemise 8 et communiquant par un canal 16 avec une chambre d'alimentation 15 prévue dans l'épaisseur du couvercle.

Le fond de la chambre de pression 12 communique avec un canal de purge 17 et une canalisation 18 d'admission du fluide de pression.

Le couvercle 5 est fixé sur le corps de manière connue par des boulons 19.

Le dispositif d'étanchéité, selon l'invention, est constitué de la chambre d'étanchéité 14 et de deux ensembles d'étanchéité 36, 37 disposés de part et d'autre de l'ouverture du canal 16 d'admission du fluide d'étanchéité.

Dans la suite, les termes «extérieur et intérieur» sont employés pour désigner des positions relatives par rapport à l'axe de la chambre de pression.

Extérieure signifie: la positition la plus éloignée de l'axe et intérieure la plus proche.

La chambre d'étanchéité n'est pas alimentée en fluide d'étanchéité par une pompe extérieure. Selon une caractéristique de l'invention, la pression est transmise au fluide de la chambre par un des ensembles d'étanchéité faisant fonction de piston et dont la face tournée vers la haute pression supporte à chaque course de compression, la pression générée dans la chambre de pression 12, pression transmise par le passage du liquide de pression entre le plongeur 3 et le fond de la chambre d'étanchéité 14.

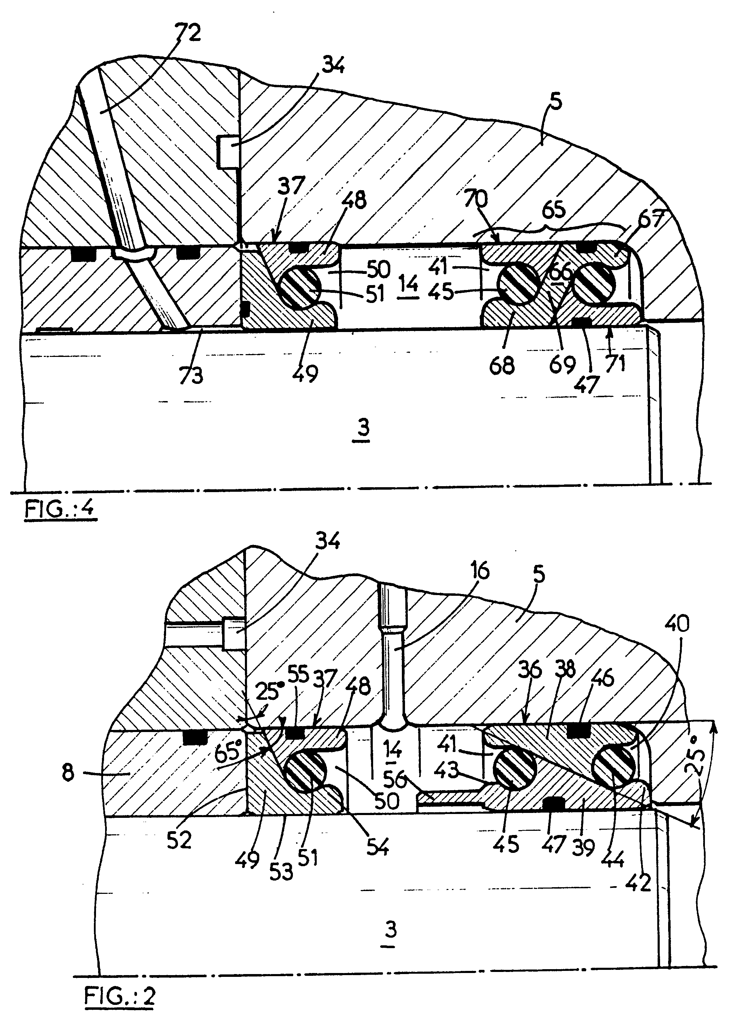

Selon l'exemple des figures 1 et 2, la chambre d'étanchéité 14 débouche directement dans l'alésage axial prévu dans le couvercle 5 et dans le prolongement de la chemise 8 logée dans un alésage axial du corps. Les ensembles d'étanchéité 36, 37 sont en contact direct avec le plongeur 3.

L'ensemble d'étanchéité 36, disposé du côté haute pression, est constitué de deux bagues: une bague extérieure 38 et une bague intérieure 39, coaxiales, emboîtées selon deux surfaces coniques se faisant face. Les deux bagues sont approximativement de section triangulaire et présentent sur leur face radiale un logement semitoroïdal 40 et 41 tangent à la surface conique de l'autre bague tandis que l'extrémité de la surface conique de la bague portant le logement présente un bourrelet 42, 43 dont la surface de raccordement à la surface conique présente dans un plan diamétral un rayon de courbure égal à celui du logement toroïdal. Lorsque les deux bagues sont montées l'une dans l'autre, les logements 40, 41 et les bourrelets 42, 43 forment des gorges semitoriques, dont l'entrée est rétrécie, dans lesquelles viennent se loger deux joints toriques 44, 45 en élastomère. Ces joints rendent les deux bagues solidaires pour le montage et assurent également l'étanchéité de la solution de continuité existant entre les deux surfaces coniques. Chacune des bagues porte sur la face cylindrique une gorge 46, 47 qui reçoit un joint d'étanchéité circonférentiel. L'angle que font les surfaces coniques, par rapport à l'axe de la chambre 14, est de l'ordre de 25°.

L'ensemble d'étanchéité 37, disposé du côté basse pression est formé d'une bague extérieure 48 et d'une bague intérieure 49.

La bague extérieure 48 présente une section de forme triangulaire et coopère par un de ses côtés avec la surface extérieure de la chambre 14 et porte une gorge circulaire 55 dans laquelle se loge un joint torique. Un deuxième côté forme la surface conique coopérant avec la surface conique correspondante de la bague intérieure. Le troisième côté porte une gorge circulaire 50 formant une partie de logement pour un joint torique 51.

La bague intérieure 49, de section également triangulaire, coopère par deux de ses côtés perpendiculaires 52, 53 respectivement avec l'extrémité radiale de la chemise 8 et avec la surface du plongeur 3. Le troisième côté forme une surface conique, faisant approximativement un angle de 65° avec l'axe de la chambre, se raccordant avec une partie approximativement parallèle au côté 53 par une surface toroïdale formant l'autre partie du logement du joint torique 51 et déterminant un bourrelet 54 sur le bord de la bague 49.

Les bagues extérieure 48 et intérieure 49 sont solidarisées par le joint torique 51, qui est maintenu en fond de gorge par le bourrelet 54.

D'une manière simplifiée, un ensemble d'étanchéité, selon l'invention, peut être défini comme un ensemble cylindrique formé de deux bagues coniques, la section de l'ensemble se présentant approximativement sous la forme d'un rectangle coupé selon une diagonale, et présentant sur au moins une de ses faces radiales une gorge circulaire logeant un joint torique élastique, la gorge formée dans une des bagues étant tangente à la surface conique de l'autre bague.

Le mode de fonctionnement du dispositif d'étanchéité selon le mode de réalisation ci-dessus décrit est le suivant: pendant la course de compression, le plongeur 3 se déplaçant vers le fond de la chambre de pression 12 comprime le fluide de pression qui s'introduit entre la surface du plongeur et la paroi de la chambre de pression jusqu'au fond de la chambre d'étanchéité 14 d'où il repousse l'ensemble d'étanchéité 36 vers le côté basse pression. Le fluide d'étanchéité qui remplit la chambre 14 sous la pression normale est soumis par l'ensemble 36 à la haute pression qu'il transmet à l'ensemble 37 assurant l'étanchéité du côté basse pression. La pression agissant par l'intermédiaire du joint torique sur la bague extérieure 48 tend à annuler le jeu initial et à plaquer énergiquement cette bague contre la surface extérieure de la chambre et d'autre part contre la bague intérieure 49 par l'intermédiaire de la portée conique. Un processus identique s'applique à la bague intérieure 49 qui prend appui sur le plongeur 3 et assure l'étanchéité à ce niveau.

Une légère fuite du fluide d'étanchéité est tolérée et participe à la lubrification du plongeur améliorant ainsi le frottement et la durée de vie des organes mobiles.

Pendant la course d'aspiration, le plongeur se déplace vers le côté basse pression, la pression dans la chambre de pression tombe et l'ensemble 36, qui n'est plus poussé par le fluide de pression, revient à sa position initiale, vers le fond de la chambre d'étanchéité du côté haute pression, repoussé par le fluide d'étanchéité. La contrainte qui s'exerçait contre l'ensemble 37 du côté basse pression cesse. L'étanchéité est assurée, tant du côté basse pression que haute pression, par les joints toriques qui équipent les gorges 55, 46 et 47.

Comme une fuite de fluide d'étanchéité est admise et qu'il n'y a pas d'alimentation continue de la chambre 14, il est prévu, sur la bague intérieure 39 de l'ensemble 36 placé du côté haute pression, une collerette 56, dirigée vers le côté basse pression, faisant office de butée pour maintenir un écartement minimum contre les deux ensembles permettant la compensation intermittente de la fuite du fluide d'étanchéité.

Dans les figures 3 et suivantes, les éléments semblables à ceux précédemment décrits portent les mêmes références.

Selon un autre exemple de réalisation, conforme à l'invention, montré figure 3, l'ensemble d'étanchéité 37, placé du côté basse pression, est identique à celui précédemment décrit, tandis que l'ensemble 57, placé du côté haute pression, comporte deux bagues extérieures 58, 59 est une bague intérieure 60, présentant une partie cylindrique 61 portant à sa périphérie et approximativement dans le plan radial de symétrie un collet trapézoïdale 62.

Les bagues extérieures 58 et 59 sont en tous points semblables à la bague extérieure 48 de l'ensemble d'étanchéité 37 placé du côté basse pression.

L'ensemble 57 peut être considéré comme formé de deux ensembles d'étanchéité 37 solidaires, disposés symétriquement par rapport à un plan radial.

Comme dans les ensembles précédemment décrits, les bagues sont solidarisées au moyen des joints toriques 63, 64 maintenus dans des gorges de géométrie appropriée.

Le principe de fonctionnement de l'ensemble d'étanchéité est similaire, par la bague extérieure 59 et la bague intérieure 60 à celui de l'ensemble 37: la pression transmise par les joints toriques agit sur les bagues, provoque le rattrapage des jeux et assure un contact de ces éléments dans l'alésage de la chambre d'étanchéité.

Un autre exemple de réalisation d'un ensemble d'étanchéité est montré figure 4. L'ensemble d'étanchéité 37, du côté basse pression, est identique à l'ensemble correspondant des précédentes réalisations. L'ensemble d'étanchéité 65 du côté haute pression comporte une bague centrale 66 présentant une section en forme de S rectiligne, aplati, comportant deux parties cylindriques 68, 67, coopérant respectivement avec la surface extérieure de la chambre 14 et avec la surface du plongeur 3, reliées par une partie oblique 69 faisant avec les deux parties 68, 67 un angle supérieur à 90° (par exemple 115°) et deux bagues 70, 71 respectivement extérieure et intérieure, présentant comme la bague extérieure 48 de l'ensemble 37 une surface conique coopérant avec les surfaces coniques formées par la partie oblique 69 de la bague 66, lesdites bagues étant disposées symétriquement par rapport à la bague 66.

Le mode de fonctionnement de l'ensemble d'étanchéité 65 est en tout point comparable à celui de l'ensemble 37 selon que la pression s'exerce du côté haute pression ou du côté basse pression.

Dans la réalisation représentée la chambre d'étanchéité 14 est fermée. Le fluide d'étanchéité est introduit, par une canalisation 72 débouchant en amont de l'ensemble d'étanchéité 37 placé du côté basse pression, dans une chambre 73. Lors du cycle d'admission du fluide de pression, l'ensemble 37 n'est plus soumis à la haute pression et il est alors possible en envoyant le fluide d'étanchéité sous pression relativement faible par exemple $100.10^5$ (100 bars) d'écarter la bague intérieure 49 de la surface du plongeur, pour le faire pénétrer dans la chambre d'étanchéité où il compense les éventuelles pertes dues aux fuites.

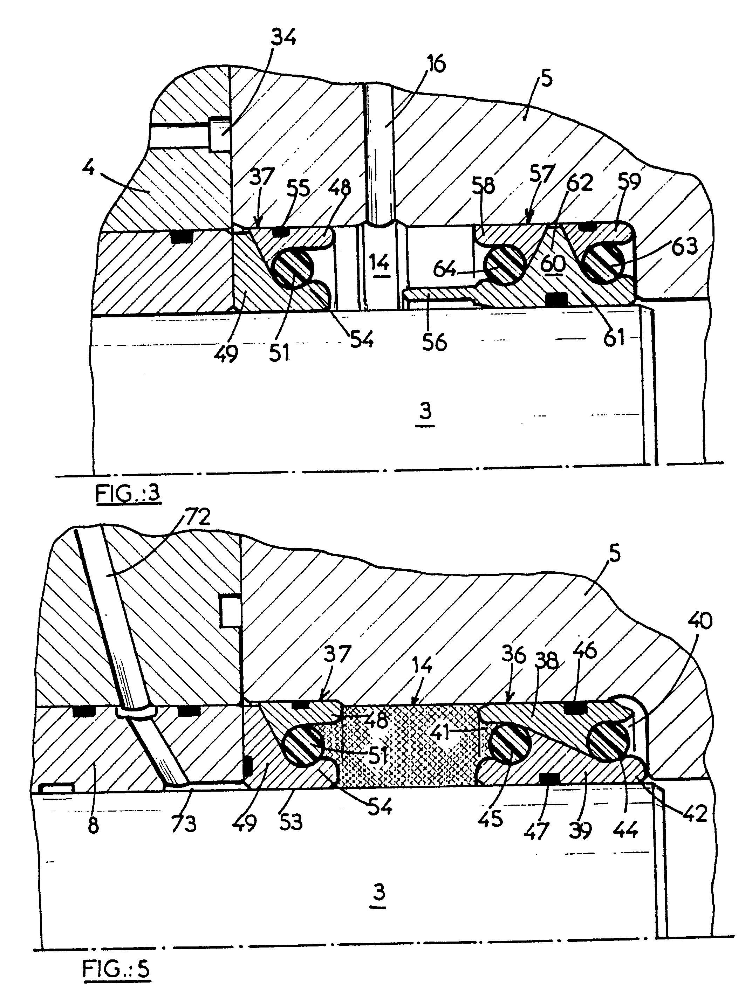

La figure 5 montre un exemple de dispositif d'étanchéité dans lequel le fluide d'étanchéité remplissant la chambre 14 est un produit pateux constitué par exemple d'un liant chargé de particules de téflon ou tout autre matériau adapté dont la granulométrie sera choisie en fonction du type d'emploi envisagé.

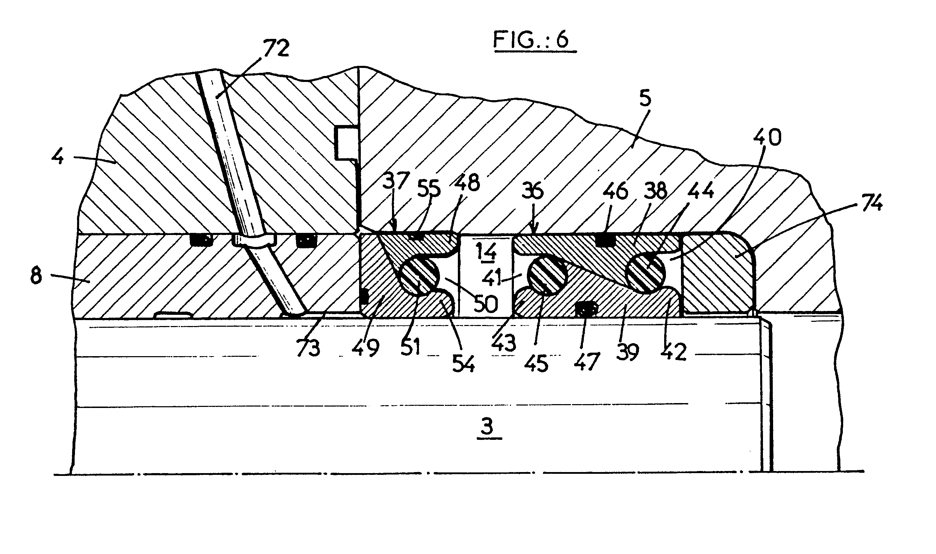

La figure 6 montre un dispositif d'étanchéité semblable à celui de l'exemple précédent dans lequel une bague de butée 74 est placée contre le fond de la chambre d'étanchéité, du côté haute pression, pour éviter le coincement de la bague extérieure 38 de l'ensemble d'étanchéité 36.

La chambre 14 étant soumis à des pressions élevées par exemple de l'ordre de $2000.10^5$ à $3000.10^5$ Pa (2000 à 3000 bars), on ne peut accepter des usinages présentant des angles aigus, car ceux-ci sont le siège d'une concentration d'efforts facilitant la corrosion, et entraînant la rupture de la pièce. Afin d'éviter cet inconvénient, le fond de la chambre présente une courbe de raccordement qui nécessite soit un usinage particulier du bord de la bague extérieure tel que montré figure 4 et suivantes soit l'interposition d'une bague de butée.

Les avantages que présente le dispositif d'étanchéité selon l'invention sont:

— l'intégration de tous les ensembles d'étanchéité dans le couvercle de manière à ne conserver qu'un seul élément sollicité en pression;

— la simplification de la chemise et la suppression des contraintes liées à la haute pression;

— la possibilité de traitements de durcissement superficiel de la chambre d'étanchéité, par suite de sa position dans le couvercle, permettant l'augmentation de la dureté de la chambre et par conséquent l'obtention d'une meilleure étanchéité et d'une plus grande longévité;

— la simplification de l'usinage;

— la qualité de l'étanchéité et la durée de vie supérieures à celles obtenues avec les dispositifs de l'art antérieur.

— la disposition des bagues leur permet de ne travailler qu'en compression et non en flexion avec rattrapage des jeux grâce à leur déplacement cône sur cône.

## Revendications

1. Dispositif d'étanchéité haute pression entre deux éléments en mouvement relatif, plus particulièrement destiné à une pompe ou un amplificateur de pression, comportant un plongeur (3) se déplaçant d'un mouvement alternatif longitudinal dans une chambre de pression (12) pour comprimer un fluide contenu dans ladite chambre, le plongeur (3) étant entouré d'un dispositif d'étanchéité (14, 36, 37) comportant deux ensembles d'étanchéité (36, 37) espacés l'un de l'autre, susceptible de se déplacer axialement dans une chambre (14) circonvoisine du plongeur, l'espace compris entre lesdits ensembles étant rempli d'un fluide d'étanchéité, au moins un desdits ensembles étant formé d'au moins deux bagues, une extérieure (38, 48) et une intérieure (39, 49) présentant respectivement une surface conique intérieure et une surface conique extérieure, le long desquelles elles sont au moins partiellement emboîtées, caractérisé en ce qu'au moins un ensemble d'étanchéité (36, 37) forme un ensemble cylindrique constitué d'au moins deux bagues coniques (38, 39; 48, 49), la section de l'ensemble se présentant approximativement sous la forme d'un rectangle coupé selon une diagonale et dont au moins l'une des faces radiales présente une gorge annulaire (40, 41, 50) débouchant axialement dans laquelle est retenue un joint torique élastique (44, 45, 51; 63, 64), ladite gorge formée dans une des bagues étant tangente à la surface conique de l'autre bague.

2. Dispositif selon la revendication 1, caractérisé en ce que la bague extérieure (38, 48, 59, 67) porte sur sa surface cylindrique une gorge (46, 55) dans laquelle est logé un joint élastique.

3. Dispositif selon la revendication 2, caractérisé en ce que la bague intérieure (39, 61, 71) porte sur sa surface cylindrique une gorge (47) dans laquelle est logé un joint élastique.

4. Dispositif selon la revendication 1, caractérisé en ce que l'extrémité de la surface conique de la bague à laquelle le joint est tangent comporte un bourrelet (42, 54) formant un rétrécissement à l'entrée de la gorge pour maintenir le joint qui solidarise les deux bagues.

5. Dispositif selon la revendication 1, caractérisé en ce qu'au moins un ensemble d'étanchéité (57) est formé de deux ensembles tels que décrit, solidaires, disposés symétriquement par rapport au plan radial, ledit ensemble comportant deux bagues extérieures (58, 59) et une bague intérieure (60), ladite bague intérieure présentant une partie cylindrique (61) intérieure portant à sa périphérie et approximativement dans le plan radial de symétrie, un collet trapézoïdal (62).

6. Dispositif selon la revendication 1, caractérisé en ce qu'au moins un ensemble d'étanchéité comporte une bague centrale (66) de section en forme de S rectiligne, aplati, comportant deux portées cylindriques (68, 67) coopérant respectivement avec le plongeur (3) et avec la surface extérieure de la chambre d'étanchéité (14), raccordées par une partie oblique (69) faisant avec les deux parties cylindriques un angle supérieur à 90°, et deux bagues: une extérieure (70) et une intérieure (71) comportant une surface conique coopérant avec les surfaces coniques formées par la partie oblique (69) de la bague centrale (66), et disposées symétriquement par rapport à la bague centrale (66).

7. Dispositif selon l'une des revendications précédentes comportant deux ensembles d'étanchéité, un ensemble étant du côté basse pression et l'autre du côté haute pression, caractérisé en ce que l'ensemble d'étanchéité (36, 57) placé du côté haute pression comporte sur la bague intérieure (39, 60) une collerette (56) dirigée vers le côté basse pression faisant office de butée pour maintenir un écartement minimum entre les deux ensembles d'étanchéité.

8. Dispositif selon l'une des revendications précédentes, caractérisé en ce que l'ensemble d'étanchéité (36, 57, 65) situé du côté haute pression transmet par sa face radiale situé du côté haute pression, ladite pression au fluide d'étanchéité occupant l'espace compris entre lesdits deux ensembles.

9. Dispositif selon l'une des revendications précédentes, caractérisé en ce que les bagues sont métalliques, par exemple du bronze et les joints en élastomère ou caoutchouc.

**Patentansprüche**

1. Hochdruckdichtungsanordnung zwischen zwei sich relativ zueinander bewegenden Teilen, insbesondere für eine Pumpe oder einen Druckverstärker mit einem Tauchkolben (3), der sich in einer Druckkammer (12) in Längsrichtung hin- und herbewegt und dabei ein in ihr befindliches Fluid komprimiert und der von einer Dichtungsanordnung (14, 36, 37) umgeben ist, die aus zwei in einem Abstand voneinander angeordneten Dichtungseinheiten besteht, die sich in einer den Tauchkolben umgebenden Kammer (14) axial bewegen können, wobei der Raum zwischen den Dichtungseinheiten mit einem Dichtungsfluid gefüllt ist und mindestens eine der Dichtungseinheiten aus mindestens zwei Ringen, einem äußeren Ring (38, 48) und einem inneren Ring (39, 49), besteht, die eine konische Innenfläche bzw. eine konische Außenfläche besitzen, an denen sie mindestens teilweise ineinandergesteckt sind, dadurch gekennzeichnet, daß mindestens eine Dichtungseinheit (36, 37) eine aus mindestens zwei konischen Ringen (38, 39; 48, 49) bestehende, zylindrische Einheit bildet, deren Querschnitt annähernd die Form eines in einer Diagonalen geschnittenen Rechtecks hat und die auf mindestens einer der radialen Flächen eine axial ausmündende, ringförmige Nut (40, 41, 50) aufweist, in der ein elastischer O-Ring (44, 45, 51; 63, 64) zurückgehalten ist, wobei die konische Fläche eines der Ringe tangential zu der in dem anderen Ring gebildeten Nut verläuft.

2. Anordnung nach Anspruch 1, dadurch gekennzeichnet, daß der äußere Ring (38, 48, 59, 67) auf seiner zylindrischen Fläche eine Nut (46, 55) aufweist, in der ein elastischer Dichtring sitzt.

3. Anordnung nach Anspruch 2, dadurch gekennzeichnet, daß der innere Ring (39, 61, 71) auf seiner zylindrischen Fläche eine Nut (47) aufweist, in der ein elastischer Dichtring sitzt.

4. Anordnung nach Anspruch 1, dadurch gekennzeichnet, daß das Ende der konischen Fläche des Rings, die sich tangential zu dem O-Ring erstreckt, einen Wulst (42, 54) aufweist, der eine Verengung am Eingang der Nut bildet, um den O-Ring, der die beiden Ringe zusammenhält, festzuhalten.

5. Anordnung nach Anspruch 1, dadurch gekennzeichnet, daß mindestens eine Dichtungseinheit (57) aus zwei Einheiten der beschriebenen Art gebildet ist, die miteinander verbunden sind und bezüglich der radialen Ebene symmetrisch angeordnet sind, wobei diese Einheit aus zwei äußeren Ringen (58, 59) und einem inneren Ring (60) besteht, der einen inneren zylindrischen Teil (61) besitzt, welcher an seinem Umfang und annähernd in der radialen Symmetrieebene eine trapezförmige ringförmige Rippe (62) aufweist.

6. Anordnung nach Anspruch 1, dadurch gekennzeichnet, daß mindestens eine Dichtungseinheit einen zentralen Ring (66) mit einem Querschnitt in Form eines geradlinigen, abgeflachten S, das zwei zylindrische Auflageflächen (68, 67) besitzt, die mit dem Tauchkolben (3) und der äußeren Fläche der Dichtungskammer (14) zusammenwirken und durch einen schrägen Teil (69) miteinander verbunden sind, der mit den beiden zylindrischen Teilen einen Winkel von mehr als 90° bildet, und zwei Ringe, einen äußeren Ring (70) und einen inneren Ring (71) besitzt, die jeweils eine konische Fläche aufweisen, die mit den konischen Flächen des schrägen Teils (69) des zentralen Rings (66) zusammenwirken, und bezüglich des zentralen Rings (66) symmetrisch angeordnet sind.

7. Anordnung nach einem der vorhergehenden Ansprüche, bestehend aus zwei Dichtungseinheiten, von denen die eine niederdruckseitig und die andere hochdruckseitig angeordnet ist, dadurch gekennzeichnet, daß die auf der Hochdruckseite angeordnete Dichtungseinheit (36, 57) an dem inneren Ring (39, 60) eine auf die Niederdruckseite zu gerichtete Lippe (56) besitzt, die einen Anschlag bildet, der einen Mindestabstand zwischen den beiden Dichtungseinheiten gewährleistet.

8. Anordnung nach einem der vorhergehenden Ansprüche, dadurch gekennzeichnet, daß die hochdruckseitig angeordnete Dichtungseinheit (36, 57, 65) mit ihrer hochdruckseitigen radialen Fläche diesen Druck auf das Dichtungsfluid überträgt, das den Raum zwischen den beiden Dichtungseinheiten ausfüllt.

9. Anordnung nach einem der vorhergehenden Ansprüche, dadurch gekennzeichnet, daß die Ringe aus Metall, beispielsweise Bronze, und die Dichtungen aus Elastomer oder Gummi bestehen.

**Claims**

1. A high-pressure sealing device between two elements in relative movement, intended more particularly for a pump or a pressure amplifier, comprising a plunger (3) moving in a longitudinal alternating movement in a pressure chamber (12) in order to compress a fluid contained in the said chamber the plunger (3) being surrounded by a sealing device (14, 36, 37) comprising two sealing assemblies (36, 37) located at a distance from one another and capable of moving axially in a chamber (14) surrounding the plunger, the space contained between the said assemblies being filled with a sealing fluid, at least one of the said sealing assemblies is formed from at least two rings, namely an outer ring (38, 48) and an inner ring (39, 49) having respectively an inner cylindrical surface and an outer conical surface, along which the two rings are at least partially interlocked, characterized in that at least one of the sealing assembly (36, 37) forms a cylindrical assembly comprising at least two conical rings (38, 39; 48, 49), the cross-section of the assembly being approximately in the form of a rectangle cut along a diagonal and having, on at least one of its radial faces, an axially opening circular groove (40, 41, 50) in which an elastic O-ring (44, 45, 51; 63, 64) is seated, the said groove maid in one of the rings being tangent to the conical surface of the other ring.

2. The device as claimed in claim 1, characterized in that the out-ring (38, 48, 59, 67) has, on its cylindrical surface, a groove (46, 55) in which an elastic gasket is seated.

3. The device as claimed in claim 2, characterized in that the inner ring (39, 61, 71) has, on its cylindrical surface, a groove (47) in which an elastic gasket is seated.

4. The device as claimed in claim 1, characterized in that the end of the conical surface of the ring to which the O-ring is tangent has a bead (42, 54) forming a narrowing at the entrance of the groove in order to restrain the O-ring.

5. The device as claimed in claim 1, characterized in that at least one sealing assembly (57) is formed from two assemblies as described, which are integral with one another and which are arranged symmetrically relative to the radial plane, the said assembly comprising two outer rings (58, 59) and an inner ring (60), the said inner ring having an inner cylindrical part (61) carrying a trapezoidal shoulder (62) on its periphery and approximately in the radial plane of symmetry.

6. The device as claimed in claim 1, characterized in that at least one sealing assembly comprises a central ring (66) of a cross-section in the form of a flattened rectilinear S comprising two cylindrical bearing surfaces (68, 67) interacting respectively with the outer surface of the sealing chamber (14) and with the plunger (3) and connected by means of an oblique part (69) forming an angle greater than 90° relative to the two cylindrical parts, and two rings, namely an outer ring (70) and an inner ring (71), having a conical surface interacting with the conical surfaces formed by the oblique part (69) of the central ring (66) and being arranged symmetrically relative to the central ring (66).

7. The device as claimed in one of the preceding claims comprising two sealing assemblies, one assembly being on the low-pressure side and the other on the high-pressure side, characterized in that the sealing assembly (36, 57) located on the high-pressure side has, on the inner ring (39, 60), a flange (56) directed towards the low-pressure side and fuctionning as a stop to maintain a minimum distance between the two sealing assemblies.

8. The device as claimed in one of the preceding claims, characterized in that the sealing assembly (36, 57, 65) located on the high-pressure side, via its radial face located on the high-pressure side, transmits the said pressure to the sealing fluid occupying the space contained between the said two assemblies.

9. The device as claimed in one of the preceding claims, characterized in that the rings are made of metal, for example bronze, and the O-rings and gaskets are made of elastomer or rubber.

FIG.:1

FIG.:4

FIG.:2

9

FIG.:3

FIG.:5

FIG.: 6

EP 0 218 664 B1